# EUROPEAN PATENT APPLICATION

(11) **EP 1 312 426 A2**
(43) Date of publication of application: **21.05.2003**
(21) Application number: 02022624.7
(22) Date of filing: 09.10.2002
(51) Int. Cl.: B07B 13/08

(54) **Stone separator**

(30) Priority: 10.10.2001 SE 0103359
(71) Applicant: Jönsson, Sven, 253 74 Helsingborg (SE)
(72) Inventor: Jönsson, Sven, 253 74 Helsingborg (SE)
(74) Representative: Giver, Sören Bo

(57) **Abstract**

A device (1) for removing stones (2) from root crops (3) in a mixture of root crops (3) and stones (2). The device (1) can be located in a cleaning plant or in a harvester. The device (1) is characterised in that it comprises a rotatable shaft (4), elongate carrier elements (5) without considerable rigidity which are connected with the shaft (4), and surface-forming means (6) which are arranged at the ends of the carrier elements (5), which are the outer ends relative to the shaft (4). The carrier elements (5) are arranged so that at a rotary speed of the shaft (4) they are capable by centrifugal force of carrying, via the surface-forming means (6), root crops (3) but not stones (2).

## Description

### Field of the Invention

The present invention relates to a device for removing stones from root crops in a mixture of root crops and stones. The invention also concerns a cleaning plant comprising said device and a harvester comprising said device.

### Background Art

When lifting root crops by means of a harvester, dirt and stones accompany the root crops. In consideration of environmental issues and economical interests it is important for as much as possible of dirt and stones to be removed from the root crops lifted before transporting them to a wholesale dealer, a refinery or some other recipient.

Dirt and small stones can be removed from the root crops by means of a grid and a stone separation table. Such a stone separation table is described, for example, in US 5,425,459. Root crops with dirt and stones are passed across the stone separation table, whereby small stones and dirt fall down through the gaps in the stone separation table and are thus removed from the root crops. However, stones of a greater dimension, i.e. stones resembling the root crops in terms of size, are not removed but will accompany the root crops to a storage tank or the like.

For example, after lifting sugar-beets, large stones will thus be found among the sugar-beets when delivered to a sugar mill. Such stones cause great difficulties in the processing of the sugar-beets in the sugar mill. Therefore the sugar mills have introduced high penal charges to be paid by farmers if stones are found among the sugar-beets. There is thus a need for a device which is capable of removing also large stones from lifted root crops.

Various solutions have been suggested to provide such a device for removing large stones from root crops.

Large stones can to some extent be separated from the root crops in a so-called roulette, but in such a device the root crops are subjected to shocks and impacts which cause damage to the root crops. This reduces the shelf life of the root crops when stored since when damaged they are more easily attacked by bacteria and fungi and thus become rotten.

Another common solution is to pass the beets over a brush arrangement. The bristles are adapted to carry root crops but will yield to stones which have a much higher density.

GB 1,184,616 discloses a device for removing dirt and stones from potatoes, which comprises a wide brush over which potatoes and stones are allowed to fall. The potatoes are caught by the bristles, but the stones fall through.

SE 514,058 discloses a device for separating stones from beets, which comprises a combination cleaning plant with a spring screen and rotating brushes. The spring screen consists of a number of leaf springs which let through stones and only a small number of beets. These beets are then separated from the stones by means of rotating brushes which are formed so as to let through the stones while the beets roll on top of the brushes and are moved back to the ordinary flow of beets.

A drawback of a brush arrangement is that brushes are easily clogged by dirt and clay. A further drawback is that the bristles are quickly worn out since they must be bent to allow stones to fall through.

### Summary of the Invention

An object of the present invention is to provide a hardwearing device for removing stones from root crops, which is not susceptible to clogging by dirt, clay etc.

Another object of the invention is to provide a device as stated above, which does not significantly damage the root crops.

These objects are achieved by a device according to claim 1, a cleaning plant according to claim 10 and a harvester according claim 13. Preferred embodiments of the present invention are defined in the dependent claims.

A device according to the invention is characterised in that it comprises a rotatable shaft, elongate carrier elements without considerable rigidity which are connected with the shaft, and surface-forming means which are arranged at the ends of the carrier elements which are the outer ends relative to the shaft, the carrier elements at a rotary speed of the shaft being capable by centrifugal force of carrying, via the surface-forming means, root crops but not stones. By the carrier elements, in contrast to e.g. bristles, not having considerable rigidity, they are not stressed in the same way by being bent and can thus be made more hardwearing. The absence of considerable rigidity also makes it difficult for dirt and clay to adhere between the carrier elements. Moreover, owing to the absence of considerable rigidity, the carrier elements allow soft shocks against the root crops, which leads to the root crops not being significantly damaged.

In a preferred embodiment of the invention, said surface-forming means jointly form, at said rotary speed of the shaft, a discontinuous rotary surface which surrounds the circumferential surface of the shaft. At this rotary speed, the carrier elements thus extend away from the shaft by centrifugal force, whereby the surface-forming means are distributed so as to form a discontinuous rotary surface. By means of the thus formed rotary surface, the device can catch the root crops and stones. Since the carrier elements at said rotary speed are capable of carrying root crops but not stones, the root crops can be transported on top of the formed rotary surface while the stones owing to their greater weight press back surface-forming means and fall through the rotary surface.

Preferably, said surface-forming means are at least partly conical with the tip of the cone at said rotary speed being oriented in the centripetal force direction. This is advantageous since the bottom faces of these conical surface-forming means are thus directed away from the shaft and can form surfaces which can receive the mixture of root crops and stones. Moreover, the conical shape means that the centres of gravity of the surface-forming means are advantageously positioned so that said means by centrifugal force pull the carrier elements perpendicular away from the circumferential surface of the shaft.

Preferably, the part of each surface-forming means facing away from the shaft is also smooth and convex in the centrifugal force direction at said rotary speed. By the outermost parts of the surface-forming means being smooth and rounded, the risk of the root crops being damaged is further reduced.

In another preferred embodiment, the mass of said surface-forming means corresponds better to the mass of a root vegetable of average size than to the mass of a stone of an equivalent size. This gives the advantage that the surface-forming means meet the root crops with a momentum which is not so great that the collision damages the root crops to any considerable extent. At the same time, the surface-forming means meet the stones with a momentum that is small relative to the stones, so that the surface-forming means easily yield to the stones. This also reduces the risk of the surface-forming means being damaged by the stones.

In yet another preferred embodiment, said carrier elements are connected with the circumferential surface of the shaft in rows parallel to the longitudinal direction of the shaft, two neighbouring rows being relatively displaced. In this way, the interspaces between the surface-forming means are minimised at said rotary speed, so that the root crops cannot easily fall down between the surface-forming means.

In another preferred embodiment of the invention, each carrier element comprises a chain. Chains can be made very hardwearing, which prolongs the service life of the device.

In one more preferred embodiment, said shaft is arranged so that its longitudinal direction is essentially horizontal at said rotary speed. An essentially horizontal rotary shaft facilitates the root crops being supported by the surface-forming means in the case of the root crops being laid on top of the surface-forming means above the shaft.

Preferably, the rotation of said shaft is provided by means of a hydraulic motor. A hydraulic motor has an adjustable number of revolutions so that it may compensate for the brake force exerted by root crops and stones. Cleaning plants, loading assemblies and harvesters are in most cases driven by a hydraulic motor. The inventive device can advantageously be connected to the existing hydraulic motor of such a machine.

A cleaning plant comprising said device preferably also comprises a first conveyor for conveying the mixture of root crops and stones to the surface-forming means of said device, and a second conveyor for conveying root crops from the device. This gives the advantage that continuous conveying to and from the device can take place in a smooth way.

Preferably, said device is arranged on a cleaning plant in a horizontally formed space between said first and said second conveyor. Since the shaft of the device by rotation moves the root crops forwards in its direction of rotation it is advantageous that supply of the mixture takes place on one side of the device while discharge of root crops takes place on the other side of the device.

In an alternative embodiment of the invention, the device comprises two parallel rotatable shafts and an endless belt which runs over the two shafts and with which elongate carrier elements without considerable rigidity are connected. The advantage of such an alternative embodiment is that the conveying distance for the mixture of root crops and stones on top of the device can be made longer, so that stones and dirt can fall down between the carrier elements for a longer period of time.

By root crops is here meant all pure root crops such as sugar-beets, but also tubers such as potatoes.

By an elongate carrier element without considerable rigidity is here meant a carrier element which is not capable by its own force of retaining its longitudinally extended shape under the action of gravity, i.e. it is longitudinally collapsible. An example of such an elongate element without considerable rigidity is a chain. The chain certainly has hard and rigid links, but these links are loosely connected to each other, which means that the chain has no considerable rigidity along its full length and therefore may collapse. Another example of an elongate element without considerable rigidity is a rope, which is flexible and slack.

### Brief Description of the Drawings

The invention will now be described in more detail with reference to the accompanying drawings, in which
Fig. 1 is a schematic side view of a device according to an embodiment of the invention, and
Fig. 2 is a schematic top plan view of the device in Fig. 1.

### Description of Preferred Embodiments

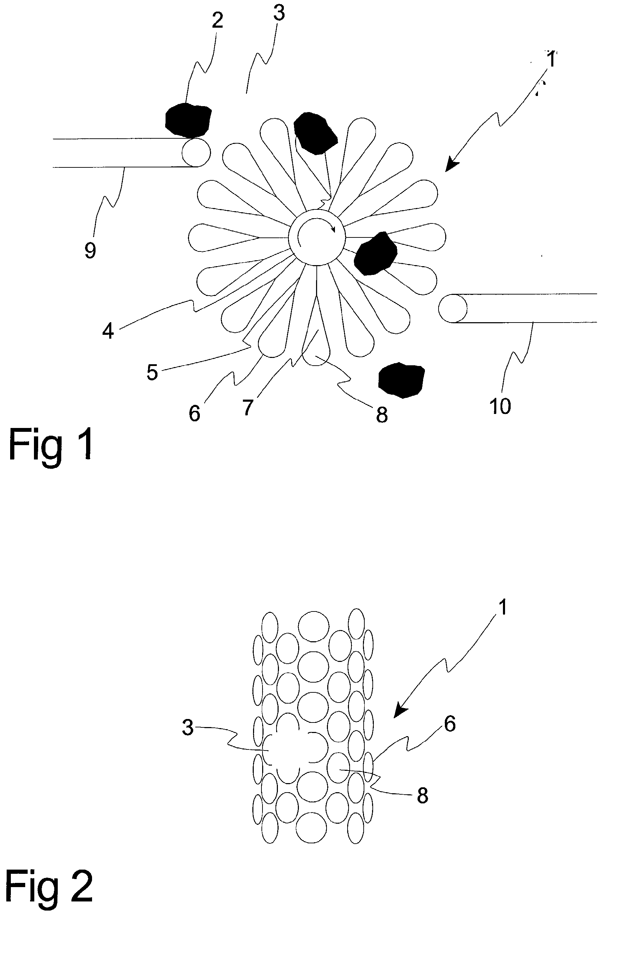

Fig. 1 illustrates a device 1 for removing stones 2 from root crops 3 according to a preferred embodiment. The device 1 is mounted on a cleaning plant or a harvester and comprises essentially an elongate rotatable shaft 4, carrier elements 5 which are arranged on the shaft 4 and surface-forming means 6 which are carried by the carrier elements 5.

The shaft 4 is arranged so that its longitudinal direction is horizontal, and it is driven by means of a hydraulic motor (not shown). Alternatively, the shaft 4 can be connected to a V-belt variator which also drives conveyor belts of, for instance, a cleaning plant.

Each carrier element 5 consists of a metal chain which at one end is connected with a surface-forming means 6 and at its other end is fixedly mounted on the circumferential surface of the shaft 4. The carrier elements 5 may also consist of ropes which are slack enough to be bent without considerable resistance. For example, nylon ropes can be made sufficiently flexible, and they are hardwearing as well.

Each surface-forming means 6 has a conical portion 7 whose tip is connected with one end of a carrier element 5 and a hemispherical portion 8 which curves outwards from the conical portion 7. The transition from the conical portion 7 to the hemispherical portion 8 is even without any sharp edge. The surface-forming means 6 are made of hard rubber, plastic or some other hardwearing material. They can be made so that the conical portion 7 and the hemispherical portion 8 are moulded in one piece. The mass of the surface-forming means 6 is adjusted so as to be approximately the same as the mass of an average root vegetable 3. The size of the surface-forming means 6 and the density of the material are dimensioned so that the mass will be the appropriate one. For more accurate adjustment of the mass, the surface-forming means 6 can, for instance, be made hollow.

The carrier elements 5 are mounted on the circumferential surface of the shaft 4 at regular intervals in rows that are parallel to the longitudinal direction of the shaft 4. Two neighbouring rows are relatively displaced, so that the fixing point of a carrier element 5 in one row is located on an imaginary circumferential line extending half-way between two fixing points of carrier elements 5 in a neighbouring row.

When the shaft 4 is rotated by the hydraulic motor, the carrier elements 5 with the surface-forming means 6 extend, at a given rotary speed, straight away from the circumferential surface of the shaft 4 owing to centrifugal force. By the rows of carrier elements 5 being relatively displaced as stated above, the surface-forming means 6 will be distributed at this rotary speed in the way as shown in Fig. 2. The hemispherical portions 8 of the surface-forming means 6 in this way form a discontinuous rotary surface which surrounds the circumferential surface of the shaft 4. The interspaces between the surface-forming means 6 are too small to allow root crops 3 to fall down between the surface-forming means 6.

The device 1 is mounted in the space between a first conveyor belt 9, which is adapted to move the mixture of root crops 3 and stones 2 to the device 1, and a second conveyor belt 10 which is adapted to move root crops 3 away from the device 1 to a storage vessel or the like. The first conveyor belt 9 is arranged so that, at said rotary speed, it lets off root crops 3 and stones 2 onto the rotary surface formed by the surface-forming means 6 obliquely above the shaft 4, see Fig. 1. Surface-forming means 6 which during rotation are presently positioned vertically above the shaft 4 move away from the first conveyor belt 9. The second conveyor belt 10 is arranged to catch root crops 3 on the other side of the device 1 and is positioned in a horizontal plane which is lower than that of the first conveyor belt 9.

In operation of the device 1 for removing stones 2 from root crops 3, the number of revolutions of the hydraulic motor is first set so that the carrier elements 5 by centrifugal force are capable of carrying the weight of a root vegetable 3 but not the weight of a stone 2. A suitable number of revolutions can be determined by testing by simply placing stones 2 and root crops 3 on the rotating surface-forming means 6 at different numbers of revolutions to see whether the root crops 3 only or the root crops 3 and the stones 2 are carried.

When a suitable number of revolutions has been set, the mixture of root crops 3 and stones 2 is conveyed to the surface-forming means 6 of the device 1 by means of the conveyor belt 9. The root crops 3 land on the surface-forming means 6, which strike the root crops 3 forward to the second conveyor belt 10 which conveys the root crops 3 to be collected. The striking force exerted by the surface-forming means 6 is sufficient for the root crops 3 to be held on the formed rotary surface until they fall down onto the second conveyor belt.

Small stones, dirt and clay accompanying the root crops 3 to the device 1 fall down in the interspaces between the surface-forming means 6 and onto the ground or down into a storage vessel. The impact on the hemispherical portions 8 of the surface-forming means 6 also results in clay and dirt which adhere to the root crops 3 being carefully knocked off.

Among the root crops 3 there may also be stones 2 which are approximately the same size as the root crops 3 or larger. There may also be clods of earth. A clod of earth essentially consists of earth and clay which form a larger mass weighing about the same as a stone. Such large stones 2 and clods of earth will, just like the root crops 3, not be accommodated in the interspaces between the surface-forming means 6, but when the stones 2 or clods of earth land on the surface-forming means 6 they will, owing to their greater weight, push away the surface-forming means 6, as illustrated in Fig. 1, and thus fall down between the carrier elements 5 and onto the ground or into a storage vessel.

The positions of the conveyor belts 9 and 10 can be optionally varied to fit different applications. Root crops 3 can thus be released and caught in different vertical or horizontal positions in relation to the device 1.

Moreover the conveying speeds of the conveyor belts 9 and 10 can be optionally set so as to fit a specific situation. For example, to reduce the striking force against the root crops 3, the speed of the first conveyor belt 9 can be selected to be higher, so that the root crops 9, as they land on the rotary surface formed, have a speed close to the speed of the surface-forming means 6. The first conveyor belt 9 can be arranged in segments with different speeds so that the mixing of root crops 3 and stones 2 is accelerated towards the device 1.

The length of the carrier elements 5, the size of the surface-forming means 6, how tight the carrier elements 5 are mounted on the circumferential surface of the shaft 4, and other magnitudes may also be varied to fit different applications of the device 1. For instance, the interspaces between the surface-forming means 6 should be slightly smaller if the root crops 3 are potatoes than if the root crops 3 are sugar-beets. Furthermore the entire device 1 may have to be larger and wider, in the longitudinal direction of the shaft 4, if it is to be arranged in a cleaning plant or loading assembly, compared with arrangement directly on a harvester such as a beet harvester.

According to an alternative embodiment of the invention (not shown), the device could comprise two parallel rotatable shafts and elongate carrier elements without considerable rigidity which are connected with an endless belt which runs over the two shafts. Thus the carrier elements are mounted on the belt driven by the two shafts, not directly on the circumferential surface of a shaft.

Just like in the above-described embodiment of the device, the device according to this alternative embodiment comprises surface-forming means which are arranged at the outer ends of the carrier elements.

The speed of the belt, i.e. the rotary speed of the shafts, would be adjusted so that the carrier elements are affected by a centrifugal force directed straight away from the belt along the sections where the belt abuts against a shaft, at which speed the carrier elements are capable of carrying, via the surface-forming means, root crops but not stones. The sections along which the belt does not abut against a shaft would be short enough for the carrier elements not to have time to be bent by root crops despite the absence of centrifugal force along these sections.

The advantage of a device according to this embodiment would be that a longer conveying distance is obtained on top of the surface-forming means, which results in a longer time for stones and dirt to fall down through the carrier surface formed by the surface-forming means.

It will be appreciated that the present invention is not restricted to the embodiments described above. Several modifications and variations are thus conceivable, and therefore the scope of the invention is exclusively defined by the appended claims.

## Claims

1. A device (1) for removing stones (2) from root crops (3) in a mixture root crops (3) and stones (2), **characterised by**
a rotatable shaft (4),
elongate carrier elements (5) without considerable rigidity which are connected with the shaft (4), and
surface-forming means (6) which are arranged at the ends of the carrier elements (5) which are the outer ends relative to the shaft (4), the carrier elements (5) at a rotary speed of the shaft (4) being capable by centrifugal force of carrying, via the surface-forming means (6), root crops (3) but not stones (2).

2. A device (1) as claimed in claim 1, in which said surface-forming means (6), at said rotary speed of the shaft (4), jointly form a discontinuous rotary surface which surrounds the circumferential surface of the shaft (4).

3. A device (1) as claimed in claim 1 or 2, in which said surface-forming means (6) at least partly are conical with the tip of the cone at said rotary speed being oriented in the centripetal force direction.

4. A device (1) as claimed in any one of the preceding claims, in which the part of each surface-forming means (6) facing away from the shaft (4) is smooth and convex in the centrifugal force direction at said rotary speed.

5. A device (1) as claimed in any one of the preceding claims, in which the mass of said surface-forming means (6) corresponds better to the mass of a root vegetable (3) of average size than to the mass of a stone (2) of an equivalent size.

6. A device (1) as claimed in any one of the preceding claims, in which said carrier elements (5) are connected with the circumferential surface of the shaft (4) in rows parallel to the longitudinal direction of the shaft (4), and in which two neighbouring rows are relatively displaced.

7. A device (1) as claimed in any one of the preceding claims, in which each carrier element (5) comprises a chain.

8. A device (1) as claimed in any one of the preceding claims, in which said shaft (4) is arranged so that its longitudinal direction is essentially horizontal at said rotary speed.

9. A device (1) as claimed in any one of the preceding claims, in which the rotation of said shaft (4) is provided by means of a hydraulic motor.

10. A cleaning plant comprising a device for removing stones (3) from root crops (3) in a mixture of root crops (3) and stones (2), **characterised in that** the device (1) comprises a rotatable shaft (4), elongate carrier elements (5) without considerable rigidity which are connected with the shaft (5), and surface-forming means (6) which are arranged at the ends of the carrier elements (5) which are the outer ends relative to the shaft (4), the carrier elements (5) at a rotary speed of the shaft (4) being capable by the centrifugal force of carrying, via the surface-forming means (6), root crops (3) but not stones (2).

11. A cleaning plant as claimed in claim 10, further comprising a first conveyor (9) for moving said mixture to the surface-forming means (6) of said device (1), and a second conveyor (10) for moving root crops (3) from the device (1).

12. A cleaning plant as claimed in claim 11, in which said device (1) is arranged in a horizontally formed space between said first conveyor (9) and said second conveyor (10).

13. A harvester for harvesting root crops (3), comprising a device (1) for removing stones (2) from root crops (3) in a mixture of root crops (3) and stones (2), **characterised in that** the device (1) comprises a rotatable shaft (4), elongate carrier elements (5) without considerable rigidity which are connected with the shaft (4), and surface-forming means (6) which are arranged at the ends of the carrier elements (5) which are the outer ends relative to the shaft (4), the carrier elements (5) at a rotary speed of the shaft (4) being capable by centrifugal force of carrying, via the surface-forming means (6), root crops (3) but not stones (2).
